# EUROPÄISCHE PATENTSCHRIFT

(11) **EP 1 413 374 B1**
(45) Veröffentlichungstag und Bekanntmachung des Hinweises auf die Patenterteilung: **20.04.2011**
(21) Anmeldenummer: 03405759.6
(22) Anmeldetag: 20.10.2003
(51) Int. Cl.: B23B 29/02, B23B 29/04, B23B 29/03, B23B 27/00

(54) **Werkzeugaufnahme**
Tool holder
Porte-outil

(30) Priorität: 25.10.2002 CH 17952002
(43) Veröffentlichungstag der Anmeldung: 28.04.2004
(73) Patentinhaber: Syntronic AG, 5608 Stetten (CH)
(72) Erfinder: Hürbin, Walter, 5225 Oberbözberg (CH)
(74) Vertreter: Gachnang, Hans Rudolf

(56) Entgegenhaltungen:
- CH-A- 692 449
- US-A- 3 584 667
- US-A- 5 607 263

## Beschreibung

Gegenstand der Erfindung ist eine Werkzeugaufnahme gemäss Oberbegriff des Patentanspruchs 1 und wie aus CH-A-692449 bekannt ist.

Spanabhebende Werkzeuge wie Wendeschneidplatten werden heute an Werkzeughaltern befestigt, die das Schneidwerkzeug in der gewünschten Position zum zu bearbeitenden Werkstück halten. Der Werkzeughalter ist seinerseits auf einer Werkzeugaufnahme abnehm- und austauschbar befestigt. Eine solche Werkzeugaufnahme ist beispielsweise aus der CH-A 692449 bekannt. Die Verbindung zwischen dem Werkzeughalter und der Werkzeugaufnahme erfolgt im Stand der Technik beispielsweise durch Mitnahmebolzen an der Werkzeugaufnahme, welche in entsprechende Bohrungen am Werkzeughalter eingreifen. Durch eine geeignete Anordnung der Mitnahmebolzen kann der Werkzeughalter in einer einzigen oder in weiteren verschiedenen Stellungen auf der Werkzeugaufnahme aufgesetzt werden. Die Verbindung zwischen dem Werkzeughalter und der Werkzeugaufnahme mit dem bekannten Mittel ist so lange befriedigend, als dass diese präzis ausgebildet sind. Präzis ineinander passende Teile sind jedoch problematisch beim Zusammenfügen und können, wenn sie längere Zeit nicht mehr voneinander gelöst worden sind, nur schwer getrennt werden. Werden diese Teile jedoch mit geringerer Präzision hergestellt, so kann kein spielfreier Sitz gewährleistet werden, was zu Toleranzproblemen bei der Bearbeitung der Werkstücke führen kann.

Aufgabe der vorliegenden Erfindung ist die Schaffung einer Werkzeugaufnahme, bei der der Werkzeugaufnahmeteil und der Werkzeughalter durch Kupplungsmittel miteinander verbindbar sind, deren Herstellungstoleranzen sich in vernünftigem Rahmen halten und deren Spiel nach dem Zusammenfügen hohen Ansprüchen genügen kann.

Gelöst wird diese Aufgabe durch eine Werkzeugaufnahme mit den Merkmalen des Patentanspruchs 1.

Überraschenderweise gelingt es mit der erfindungsgemässen Ausgestaltung der beiden in grösstmöglichem Abstand zum Rotationszentrum ineinandergreifenden Kupplungsmittel die gestellte Aufgabe einwandfrei zu lösen. Trotz verhältnismässig bescheidenen Anforderungen an die Toleranzen der ineinandergreifenden Teilkreise bilden diese, einmal zusammengefügt, eine formschlüssige, grosse kräfteaufnehmende Verbindung zwischen Aufnahmeteil und Werkzeughalter ohne dass nach der gegenseitigen Verschraubung eine Verklemmung stattfindet, die ein Lösen der beiden Teile erschwert. Durch geeignete Anordnung von Teilkreisabschnitten mit unterschiedlich grossen Teilkreisradien kann das Werkzeug wahlweise in einer einzigen oder auch in mehreren möglichen Verbindungsstellungen auf dem Aufnahmeteil angeordnet werden. Die Herstellung der miteinander verbundenen Teilkreise benötigt keine Spezialwerkzeuge; sie kann mit einem bahngesteuerten Fräser erfolgen.

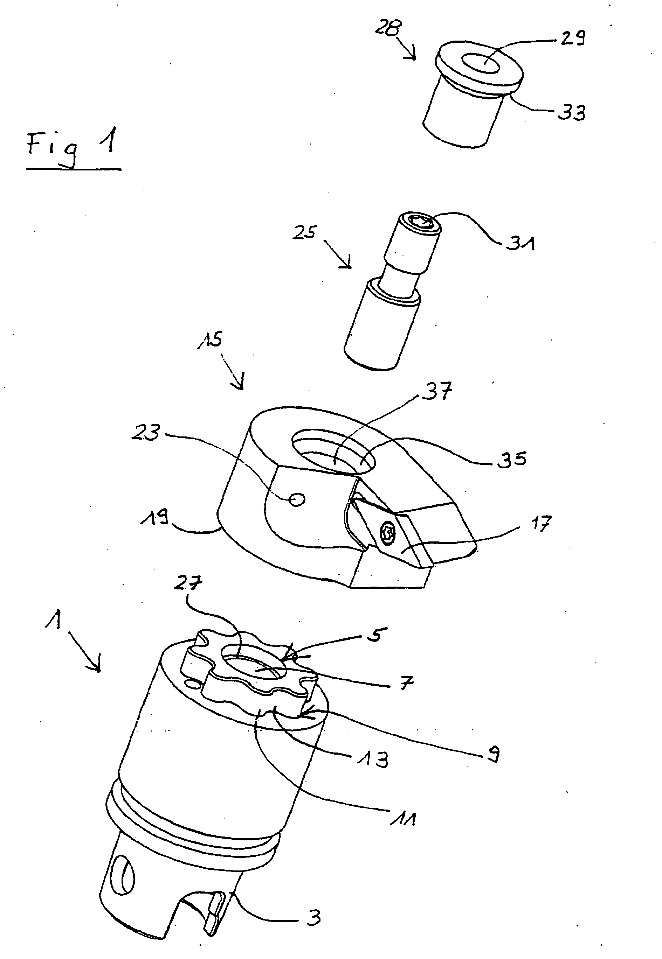

Anhand eines illustrierten Ausführungsbeispiels wird die Erfindung näher erläutert. Es zeigen
- Figur 1: eine perspektivische Darstellung der Werkzeugaufnahme mit Aufnahmeteil, Werkzeughalter, Differentialschraube und Gewindehülse,
- Figur 2: eine axiale Aufsicht auf den Aufnahmeteil.

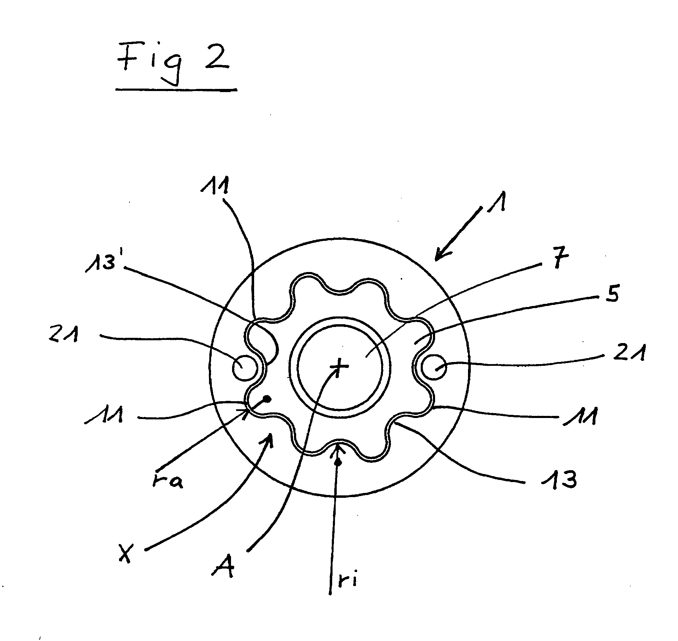

Der mit Bezugszeichen 1 bezeichnete Aufnahmeteil umfasst an seinem unteren Ende einen genormten Verbindungsteil 3, mit dem der Aufnahmeteil 1 mit der Werkzeugmaschine verbunden wird. An seiner Oberseite trägt der Aufnahmeteil 1 einen scheibenförmigen Fortsatz 5 mit einer zentralen Öffnung 7 und einer wellenförmig gestalteten Peripherie 9, die aus einer Mehrzahl von abwechslungsweise nach aussen gerichteter Teilkreise 11 und diese verbindenden nach innen gerichteter Teilkreise 13 besteht. Die Radien rₐ der nach aussen gerichteten Teilkreise 11 und die Radien rᵢ der nach innen gerichteten Teilkreise 13 können gleich oder unterschiedlich gross sein. Durch die Anordnung der Zentren der Teilkreise 11,13 auf fiktiven Kreisen (nicht dargestellt) sind die Bogenlängen der äusseren Teilkreise 11 länger als diejenigen der inneren Teilkreise 13 (vgl. Figur 2).
Wenn alle inneren und äusseren Teilkreise 11,13 gleich ausgebildet und bezüglich der Rotationssymmetrieachse A des Aufnahmeteils 1 symmetrisch angeordnet sind, so kann ein auf den Fortsatz 5 passender Werkzeughalter 15 in beliebiger Lage aufgesetzt werden. Um dies zu verhindern und nur eine Montagemöglichkeit bzw. eine Ausrichtung des Werkzeughalters 15 bzw. von dessen Werkzeug 17 bezüglich des Aufnahmeteils 1 zu gewährleisten, ist beispielsweise ein innerer Teilkreis 13' mit einem grösseren Radius rᵢ versehen, d.h. das Wellental zwischen den beiden benachbarten äusseren Teilkreisen 11 ist weniger tief (siehe Figur 2 Bereich X). Wird nun die in den Figuren nicht sichtbare, komplementär ausgebildete Ausnehmung an der Unterseite 19 des Werkzeughalters 15 exakt gleich ausgeführt, so können die beiden Teile, nämlich der Aufnahmeteil 1 und der Werkzeughalter 15 nur in einer einzigen festgelegten Position ineinander greifen. Sind beispielsweise zwei solcher vergrösserter (oder verkleinerter) Radien innerer Teilkreise 13' vorhanden, die einander zudem diagonal gegenüberliegen, so kann der Werkzeughalter 15 in zwei um 180° verschobenen Positionen aufgesetzt werden. Weil die Ausbildung der komplementär zum Fortsatz 5 ausgestalteten Ausnehmung an der Unterseite 19 des Werkzeughalters 15 in einer Ansichtsdarstellung der Darstellung in Figur 2 entsprechen würde, ist diese nicht dargestellt.

Alternativ zur beschriebenen Ausgestaltung der wellenförmigen gestalteten Peripherie des Fortsatzes 5 können selbstverständlich beliebige andere Radien der inneren und der äusseren Teilkreise 13,11 gewählt werden, wenn diese mit denjenigen in der Ausnehmung am Werkzeughalter 15 entsprechen.

Die Masstoleranzen der ineinandergreifenden Teile, nämlich dem Fortsatz 5 und der Ausnehmung im Werkzeughalter 15 liegen im Bereich von 0/-0,05mm, bzw. 0/+0,05mm am Gegenstück, (Teilkreisabweichung).

Zum Führen von Kühlflüssigkeit sind am Aufnahmeteil 1 Bohrungen 21 angeordnet, durch welche die Kühlflüssigkeit von der Werkzeugmaschine zur entsprechenden, in der Nähe der Wendeplatte 17 liegenden Mündung 23 einer Bohrung im Werkzeughalter 15 führt.
Um den Werkzeughalter 15 auf dem Aufnahmeteil 1 zu befestigen, wird eine Differentialschraube 25 in eine Gewindebohrung 27 in der öffnung 7 im Aufnahmeteil 1 und gleichzeitig in ein Innengewinde 29 an einer Gewindehülse 27 eingedreht. Die Gewindehülse 27 liegt mit ihrem Kragen 33 an einer umlaufenden Schulter 35 einer Bohrung 37 am Werkzeughalter 15 auf. Die Differentialschraube 25 weist zu diesem Zweck eine Schraubendreheröffnung 31 auf..

## Patentansprüche

1. Werkzeughalter (15) zum Befestigen auf einem an einer Werkzeugmaschine aufgesetzten Aufnahmeteil (1), wobei am Werkzeughalter (15) ein steckbares Kupplungsmittel (5) ausgebildet ist, welches formschlüssig axial auf einen am Aufnahmeteil (1) ausgebildeten Fortsatz (5) aufschiebbar ist,
**dadurch gekennzeichnet, dass**
die Verbindung von Werkzeughalter (15) mit dem Aufnahmeteil (1) durch eine Differentialschraube (25) erfolgt, deren erster Gewindeabschnitt im Aufnahmeteil (1) und deren zweiter Gewindeabschnitt in einer Gewindehülse (28) kämmt, wobei im Werkzeughalter (15) eine zentrale Bohrung (37) ausgebildet ist, in welcher die Differentialschraube (25) axial gehalten ist.

2. Werkzeughalter nach Anspruch 1, **dadurch gekennzeichnet, dass** am oberen Ende der Differntialschraube (25) eine Schraubendreheröffnung (31) ausgebildet ist, mit welcher der Werkzeughalter (15) spielfrei mit dem Aufnahmeteil (1) verbindbar ist.

3. Werkzeughalter nach einem der Ansprüche 1 oder 2, **dadurch gekennzeichnet, dass** als Kupplungsmittel am Aufnahmeteil (1) ein scheibenförmiger Fortsatz (5) ausgebildet ist, dessen Peripherie (9) eine Vielzahl von miteinander verbundenen, abwechslungsweise nach innen und nach aussen gerichteten Teilkreisen (11,13) umfasst, wobei mindestens ein Teilkreis (11,13) der Vielzahl von Teilkreisen (11,13) einen von den übrigen Teilkreisen (11,13) abweichenden Radius (r) aufweist.

4. Werkzeughalter nach Anspruch 3, **dadurch gekennzeichnet, dass** die Radien (rₐ, rᵢ) der Teilkreise (11,13) gleich oder ungleich gross sind.

5. Werkzeughalter nach einem der Ansprüche 3 oder 4, **dadurch gekennzeichnet, dass** am Werkzeughalter (15) eine zum Fortsatz (5) komplementär ausgebildete Ausnehmung ausgebildet ist.

## Claims

1. Tool holder (15) for attachment to a receptacle (1), mounted on a machine tool, whereby a pluggable coupling means (5) is provided on the tool holder (15), which can be pushed with a positive fit onto an extension (5) provided on the receptacle (1), **characterised in that** the connection between the tool holder (15) and the receptacle (1) is accomplished by means of a differential screw (25) of which the first thread section meshes with the receptacle (1) and the second thread section meshes with a threaded sleeve (28), whereby a central drill hole (37) is provided on the tool holder (15) axially, which holds the differential screw (25).

2. Tool holder according to claim 1, **characterised in that** a screw driver opening (31) is provided at the upper end of the differential screw (25), which can be used to achieve a tight fit connection between the tool holder (15) and the receptacle (1).

3. Tool holder according to any one of the claims 1 or 2, **characterised in that** a disc-shaped extension (5) is provided on the receptacle (1), of which the circumference (9) comprises a multitude of alternating inward and outward facing pitch circles (11, 13), whereby at least one pitch circle (11, 13) of the multitude of pitch circles (11, 13) has a different radius (r) than the rest of the pitch circles (11, 13).

4. Tool holder according to claim 3, **characterised in that** the radii (rₐ, rᵢ) of the pitch circles (11, 13) being equal or unequal.

5. Tool holder according to any one of claims 3 or 4, **characterised in that** a cavity being designed on the tool holder (15), complementary to the extension (5).

## Revendications

1. Porte-outil (15) à fixer sur une partie réceptrice (1) montée sur une machine-outil, sachant qu'un moyen d'accouplement emboîtable (5) est formé sur le porte-outil (15), moyen qui peut être enfilé axialement en engagement positif sur un prolongement (5) formé sur la partie réceptrice (1)
**caractérisé en ce que** la liaison du porte-outil (15) avec la partie réceptrice (1) s'effectue par une vis différentielle (25) dont la première portion filetée engrène dans la partie réceptrice (1) et dont la deuxième portion filetée engrène dans une douille filetée (28), sachant qu'un perçage central (37) est formé dans le porte-outil (15), perçage dans lequel la vis différentielle (25) est axialement maintenue.

2. Porte-outil selon la revendication 1, **caractérisé en ce qu'**une ouverture pour tournevis (31) est formée à l'extrémité supérieure de la vis différentielle (25), ouverture par laquelle le porte-outil (15) peut être relié sans jeu à la partie réceptrice (1).

3. Porte-outil selon la revendication 1 ou 2, **caractérisé en ce qu'**un prolongement en forme de disque (5) est formé comme moyen d'accouplement sur la partie réceptrice (1), prolongement dont la périphérie (9) comprend une pluralité de cercles partiels (11, 13) reliés entre eux et dirigés alternativement vers l'intérieur et vers l'extérieur, sachant qu'au moins un cercle partiel (11, 13) de la pluralité de cercles partiels (11, 13) présente un rayon (r) différent des autres cercles partiels (11, 13)

4. Porte-outil selon la revendication 3, **caractérisé en ce que** les rayons (rₐ, rᵢ) des cercles partiels (11, 13) sont identiques ou différents.

5. Porte-outil selon la revendication 3 ou 4, **caractérisé en ce qu'**un évidement de forme complémentaire au prolongement (5) est formé sur le porte-outil (15).
